# EUROPÄISCHE PATENTSCHRIFT

(11) **EP 1 293 455 B1**
(45) Veröffentlichungstag und Bekanntmachung des Hinweises auf die Patenterteilung: **01.06.2005**
(21) Anmeldenummer: 02019341.3
(22) Anmeldetag: 29.08.2002
(51) Int. Cl.: B65G 47/50

(54) **Verfahren zum Einlagern von Fördergut-Teilen in einen Speicher und zur Ausgabe von ausgewählten Fördergut-Teilen**
Method for the storage of conveyed articles in a store and for the retrieval of selected conveyed articles
Procédé de stockage d'articles transportés dans un magasin et de déstockage d'articles transportés sélectionnés

(30) Priorität: 15.09.2001 DE 10145606
(43) Veröffentlichungstag der Anmeldung: 19.03.2003
(73) Patentinhaber: Dürkopp Adler Aktiengesellschaft, 33617 Bielefeld (DE)
(72) Erfinder: Wend, Michael, 33719 Bielefeld (DE); Sieksmeier, Dirk, 32139 Spenge (DE)
(74) Vertreter: Rau, Manfred, Dr. Dipl.-Ing.

(56) Entgegenhaltungen:
- EP-A- 0 302 961
- EP-A- 0 336 714
- GB-A- 2 079 708
- US-A- 4 991 719
- US-A- 5 072 822

## Beschreibung

Die Erfindung bezieht sich auf ein Verfahren zum Einlagern von Fördergut-Teilen in einen Speicher und zur Ausgabe von ausgewählten Fördergut-Teilen. Bei derartigen Fördergut-Teilen handelt es sich bevorzugt aber nicht ausschließlich um auf Bügeln hängende Kleidungsstücke.

Es ist bekannt, Kleidungsstücke zum Zwecke der Lagerung über Fördereinrichtungen auf vorgegebene Lagerebenen zu verteilen und dort automatisch in Speichern einzulagern, die als Stichgleise ausgebildet sind. Zur Ausgabe eines einzelnen ausgewählten Fördergut-Teiles aus der auf einem solchen Stichgleis befindlichen Fördergut-Menge werden sämtliche auf dem Stichgleis befindlichen Fördergut-Teile in Bewegung gesetzt und an einer zentralen Daten-Erfassungs-Station zur Identifizierung des einzelnen Fördergut-Teiles vorbeigeführt. Die als zu entnehmende Fördergut-Teile identifizierten Teile werden sodann ausgegeben; die anderen Fördergut-Teile werden über eine andere Fördergut-Einrichtung wieder in ein freies Stichgleis eingelagert.

Nachteilig hierbei ist, daß große Fördergut-Mengen bewegt werden müssen, um gegebenenfalls eine kleine Menge an Fördergut-Teilen ausgeben zu können. Um diesen Nachteil zu verringern, wird versucht, im jeweiligen Stichgleis möglichst viele vorsortierte Fördergut-Teile einzulagern, die später gemeinsam ausgegeben werden können. Je weiter dies optimiert wird, desto geringer ist die Raumausnutzung der einzelnen Speicher-Einrichtung, d.h. desto geringer ist die Ausnutzung der Speicherkapazität der einzelnen Speicher-Einrichtung.

Der Erfindung liegt die Aufgabe zugrunde, ein Verfahren der allgemeinen Gattung so auszugestalten, dass kontinuierlich Fördergut-Teile unter bestmöglicher Raumausnutzung eines Speichers eingelagert werden können und dass jederzeit ein schneller Zugriff auf bereits im Speicher befindliche Fördergut-Teile möglich ist.

Diese Aufgabe wird erfmdungsgemäß durch die Merkmale des Anspruches 1 gelöst. Durch die erfindungsgemäßen Maßnahmen wird erreicht, daß einerseits ein schneller Zugriff, d.h. eine schnelle Ausgabe von ausgewählten, jedoch beliebigen einzelnen Fördergut-Teilen aus dem Speicher möglich ist, ohne daß andererseits nicht-ausgewählte Fördergut-Teile aus dem Speicher entnommen werden müssen. Nach der Entnahme und Ausgabe der ausgewählten Fördergut-Teile steht der durch die Entnahme entstehende Freiraum wieder für neu einzulagernde Fördergut-Teile zur Verfügung. Der Speicher wird nur an einem einzelnen Bereich, nämlich einem Eingabe-Bereich, befüllt; die Ausgabe erfolgt ebenfalls an nur einem definierten Bereich.

Durch die vorteilhafte Weiterbildung nach Anspruch 2 wird erreicht, daß nach Ausgabe ausgewählter Fördergut-Teile wieder ein vollständig befüllter Bereich des ersten Teil-Speichers an den Eingabe-Bereich herangebracht wird, so daß eine lückenlose erneute Auffüllung erreicht wird. Im Anschluß an diese Positionierung im ersten Teil-Speicher erfolgt also eine erneute Aktivierung des Eingabe-Modus zum Auffüllen des ersten Teil-Speichers.

Die weitere vorteilhafte Ausgestaltung nach Anspruch 3 dient dazu, bei Vorhandensein mehrerer Speicher diese nacheinander oder nach bestimmten vorgegebenen Kriterien zu befüllen.

Die der Erfindung zu Grunde liegende Aufgabe wird weiterhin durch die Merkmale des Anspruches 4 gelöst, wobei die gleichen Vorteile eintreten.

Weitere Merkmale, Vorteile und Einzelheiten der Erfindung ergeben sich aus der nachfolgenden Beschreibung zweier Ausführungsbeispiele anhand der Zeichnung. Es zeigt
- Fig. 1: eine schematische Darstellung eines Speichers eines ersten Ausführungsbeispiels der Erfindung in Draufsicht,
- Fig. 2: eine schematisierte Seiten-Längs-Ansicht des Speichers gemäß dem Sichtpfeil II in Fig. 1,
- Fig. 3: einen Teil-Querschnitt durch den Speicher gemäß der Schnittlinie III-III in Fig. 1,
- Fig. 4: eine aus mehreren Speichern bestehende Speicher-Einheit in schematischer Darstellung in Draufsicht,
- Fig. 5: ein Blockschaltbild der Steuerung des Speichers,
- Fig. 6a bis 6f: ein Ablaufschema eines Ausgabe-Modus und
- Fig. 7: eine schematische Darstellung eines Speichers eines zweiten Ausführungsbeispiels der Erfindung in Draufsicht.

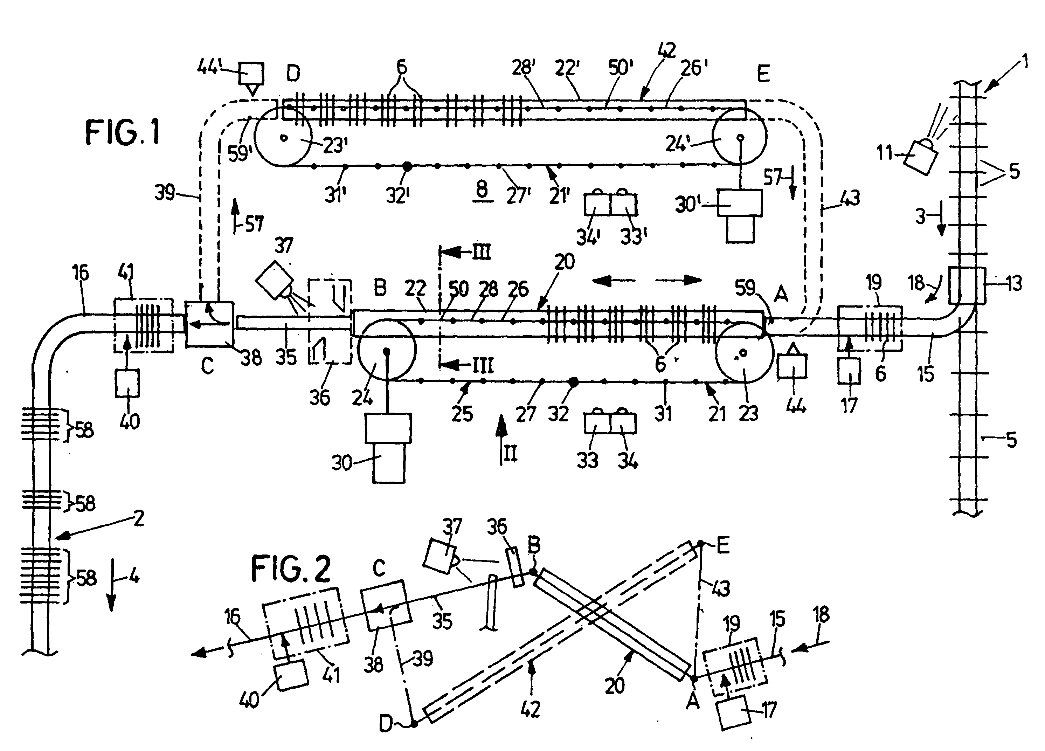

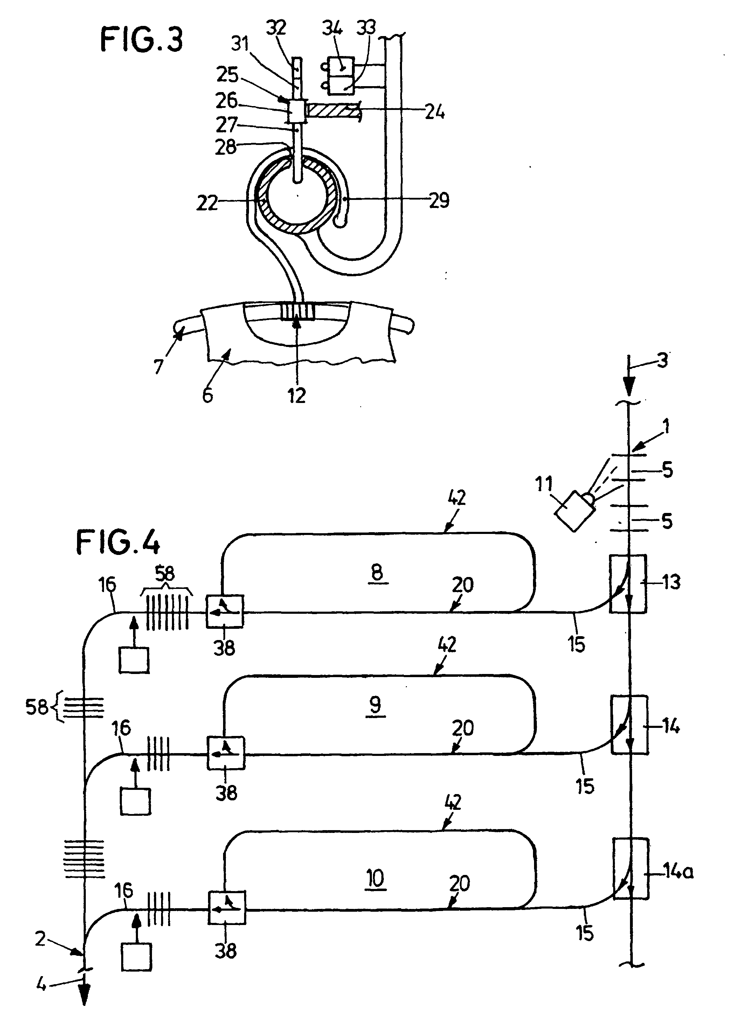

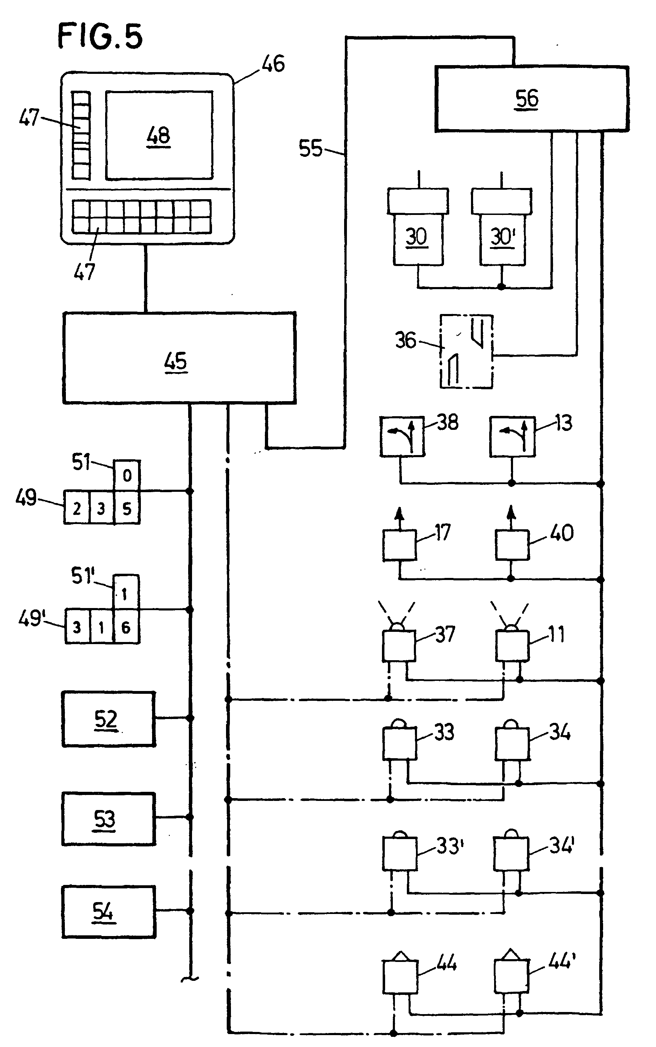

Wie den Fig. 1 und 4 entnehmbar ist, weist eine Speicher-Einheit einen Eingabe-Förderer 1 und einen Ausgabe-Förderer 2 auf. Der Eingabe-Förderer 1 fördert in Eingabe-Förderrichtung 3; der Ausgabe-Förderer 2 fördert in Ausgabe-Förderrichtung 4. Der Eingabe-Förderer 1 weist in gleichem Abstand voneinander Aufnahme-Fächer 5 auf, in denen jeweils ein zu förderndes Fördergut-Teil 6, beispielsweise ein Kleidungsstück, auf einem Träger 7, bei dem es sich beispielsweise um einen normalen Bügel handeln kann, gefördert wird. (siehe Fig. 3). Der Ausgabe-Förderer 2 benötigt eine solche Aufteilung nicht.

Zwischen den Förderern 1 und 2 sind ein oder mehrere Speicher 8, 9, 10 angeordnet. Vor dem - bezogen auf die Eingabe-Förderrichtung 3 - ersten Speicher 8 ist am Eingabe-Förderer 1 ein als erste Daten-Erfassungs-Station 11 dienendes Daten-Erfassungs-Gerät angeordnet, welches alle für das an ihr auf dem Eingabe-Förderer 1 vorbeigeführte Fördergut-Teil 6 wesentlichen Daten, durch die das Fördergut-Teil 6 eindeutig identifiziert wird, liest. Diese Daten können beispielsweise auf einem an dem Träger 7 angebrachten Datenträger 12 gespeichert sein, und zwar beispielsweise in Form eines Barcode.

Von dem Eingabe-Förderer 1 führen schaltbare Weichen 13, 14, 14a zu den Speichern 8, 9, 10. Von den Weichen 13, 14, 14a bzw. direkt vom Eingabe-Förderer 1 führen Zuführ-Rutschen 15 jeweils zum Speicher 8 bzw. 9 bzw. 10. Aus den Speichern 8, 9, 10 führen Abführ-Rutschen 16 zum Ausgabe-Förderer 2. In Fig. 2 ist hierzu anschaulich dargestellt, an welcher Stelle die Fördergut-Teile 6 aufwärts gefördert werden bzw. abwärts rutschen.

Der Speicher 8 der untereinander gleichen Speicher 8, 9, 10 wird nachfolgend primär anhand der Fig. 1 beschrieben. In der Zuführ-Rutsche 15 ist ein Stopper 17 angebracht, vor dem die auf der Zuführ-Rutsche 15 unter Schwerkraft zugeführten Fördergut-Teile 6 angehalten werden können. Bezogen auf die Zuführ-Förderrichtung 18 auf der Zuführ-Rutsche 15 befindet sich vor dem Stopper 17 also eine Zuführ-Puffer-Zone 19.

An die Zuführ-Rutsche 15 schließt sich in einem ersten Eingabe-Bereich A ein erster Teil-Speicher 20 an, der einen Speicher-Förderer 21 aufweist. Dieser Förderer 21 weist eine gerade gestreckte und aufwärts gerichtete Transport-Schiene 22 auf, die beispielsweise aus einem an seiner Oberseite geschlitzten Rohr bestehen kann, wie Fig. 3 entnehmbar ist. Der Förderer 21 weist weiterhin eine endlos umlaufende, über Umlenkräder 23, 24 geführte Förder-Kette 25 auf, deren Transport-Trum 26 oberhalb der Transport-Schiene 22 verläuft. An der Förder-Kette 25 sind nach unten ragende Mitnehmer 27 in Form von Stiften angebracht, die in den Schlitz 28 der Schiene 22 eingreifen, so daß die Mitnehmer 27 mittels eines Hakens 29 auf der Schiene 22 geführte Träger 7 mitnehmen. Eines der Umlenkräder 24 wird von einem Getriebe-Motor 30 angetrieben.

Den jeweiligen Mitnehmern 27 zugeordnet sind an der Kette 25 nach oben ragende erste Signal-Geber 31 vorgesehen. Weiterhin ist nur ein zweiter Signal-Geber 32 vorgesehen. Die ersten Signal-Geber 31 bestehen aus relativ kurzen Stiften, während der eine zweite Signal-Geber 32 aus einem längeren Stift besteht. An dem Speicher-Förderer 21 sind weiterhin ein erster Signal-Empfänger 33 und ein zweiter Signal-Empfänger 34 vorgesehen. Diese Signal-Empfänger 33, 34 bestehen üblicherweise aus Lichtschranken. Der erste Signal-Empfänger 33 zählt fortlaufend alle aus kürzeren Stiften bestehenden ersten Signal-Geber 31, während der zweite Signal-Empfänger 34 jeweils bei einem vollständigen Umlauf der Förder-Kette 25 einmal den durch einen längeren Stift gebildeten zweiten Signal-Geber 32 zählt. Durch die Erfassung des zweiten Signal-Gebers 32 durch den zweiten Signal-Empfänger 34 erfolgt jedes Mal wieder eine neue Fixierung eines Null-Punktes bzw. eines Referenz-Punktes der Förder-Kette 25.

Dem ersten Teil-Speicher 20 ist in einem ersten End-Bereich B eine Zwischen-Rutsche 35 nachgeordnet, an deren Beginn eine Vereinzelungs-Einrichtung 36 angeordnet ist, die, wenn sie in Betrieb ist, jeweils nur einen Träger 7 mit einem Fördergut-Teil 6 durchläßt. Der Einrichtung 36 ist eine ebenfalls durch ein Daten-Erfassungs-Gerät gebildete zweite Daten-Erfassungs-Station 37 nachgeordnet, in der wiederum sämtliche zur Identifikation des Fördergut-Teiles 6 dienenden Daten gelesen werden. Im Anschluß an die Zwischen-Rutsche 35 ist in einem Verzweigungs-Bereich C eine Ausgabe-Weiche 38 vorgesehen, die einerseits in die Abführ-Rutsche 16 und andererseits in eine Weiterführ-Rutsche 39 verzweigt. Hinter der Ausgabe-Weiche 38 ist in der Abführ-Rutsche 16 ein Stopper 40 vorgesehen, so daß zwischen diesem und der Ausgabe-Weiche 38 eine Ausgabe-Puffer-Zone 41 gebildet wird. Die Weiterführ-Rutsche 39 führt zum zweiten Eingabe-Bereich D eines zweiten Teil-Speichers 42, der in gleicher Weise aufgebaut ist wie der erste Teil-Speicher 20. Es werden daher dort für identische Teile die identischen Bezugsziffern mit einem hochgesetzten Strich verwendet, so daß auf die vorherige Beschreibung zum Teil-Speicher 20 verwiesen werden kann. Anschließend an den zweiten Teil-Speicher 42, und zwar beginnend an einem zweiten End-Bereich E, ist eine wiederum nach unten führende Rückführ-Rutsche 43 vorgesehen, die vor dem ersten Teil-Speicher 20 im ersten Eingabe-Bereich A in die Zuführ-Rutsche 15 einmündet, und zwar - bezogen auf die Zuführ-Förderrichtung 18 - hinter der Zuführ-Puffer-Zone 19, also zwischen letzterer und dem ersten Teil-Speicher 20.

Jeweils am Beginn bzw. unmittelbar vor dem ersten Teil-Speicher 20 im ersten Eingabe-Bereich A und vor dem zweiten Teil-Speicher 42 im zweiten Eingabe-Bereich D ist ein als Lichtschranke ausgebildeter Taster 44 bzw. 44' vorgesehen, der die in den ersten bzw. zweiten Teil-Speicher 20 bzw. 42 einlaufenden Fördergut-Teile 6 erfaßt.

Wie Fig. 5 entnehmbar ist, ist die Steuerung der Speicher-Einheit wie folgt aufgebaut:

Zentral ist eine Mikroprozessor-Steuerung 45 vorgesehen, der ein Bedienungs-Gerät 46 zugeordnet ist. Das Bedienungs-Gerät 46 weist u.a. Eingabe-Tastaturen 47 und einen Bildschirm 48 auf. Weiterhin sind der Steuerung 45 ein erster Zähler 49 zur Zählung der vom Signal-Empfänger 33 kommenden Signale zugeordnet. Dieser Zähler 49 zählt also die zwischen zwei benachbarten Mitnehmern 27 befmdlichen Förder-Fächer 50 auf dem ersten Teil-Speicher 20. Zum ersten Zähler 49 gehört ein zweiter Zähler 51, der die vom zweiten Signal-Empfänger 34 kommenden Signale zählt. Dieser Zähler zählt also nur zwischen Null und Eins.

Es sind weiterhin ein erster Zähler 49' und ein zweiter Zähler 51' für die Signal-Empfänger 33' und 34' des zweiten Teil-Speichers 42 vorgesehen, die in gleicher Weise wie die zuvor geschilderten Zähler arbeiten. Weiterhin sind der Steuerung 45 ein erster Daten-Speicher 52, ein zweiter Daten-Speicher 53 und ein dritter Daten-Speicher 54 zugeordnet, die nicht als getrennte Einheiten ausgebildet sind. Weiterhin sind auf die Steuerung 45 die erste und zweite Daten-Erfassungs-Station 11, 37, die ersten und zweiten Signal-Empfänger 33, 34 und die ersten und zweiten Signal-Empfänger 33', 34' und die Taster 44, 44' geschaltet, wobei die entsprechenden Leitungen in Fig. 5 strichpunktiert dargestellt sind.

Von der Mikroprozessor-Steuerung 45 führt eine Steuer-Leitung 55 zu einem Leistungsteil 56, von dem die Getriebe-Motoren 30, 30', die Vereinzelungs-Einrichtung 36, die Ausgabe-Weiche 38 und die Stopper 17, 40 unter entsprechender Beaufschlagung mit Strom angesteuert werden. Des weiteren erfolgt die Stromversorgung der Daten-Erfassungs-Station 37, der Signal-Empfänger 33, 34, 33', 34' und der Taster 44, 44' vom Leistungsteil 56 her über in Fig. 5 ausgezogen dargestellte Versorgungsleitungen.

Die Arbeitsweise der Speicher-Einheit ist wie folgt:

Zuerst wird in einem Eingabe-Modus ein Speicher 8 mit Fördergut-Teilen 6 gefüllt. Diese laufen einzeln auf dem Eingabe-Förderer 1, beispielsweise aus einem Warenlager oder aus einer Bekleidungs-Fertigungslinie, in Eingabe-Förderrichtung 3 in Richtung auf die Weiche 13 zu. In jedem Aufnahme-Fach 5 des Aufnahme-Förderers 1 befindet sich nur ein Fördergut-Teil 6, das von der ersten Daten-Erfassungs-Station 11 identifiziert wird. Die Daten werden an die Steuerung 45 weitergeleitet und in dem ersten Daten-Speicher 52 gespeichert. Über die Weiche 13 werden die erfaßten und identifizierten Fördergut-Teile 6 auf der Zuführ-Rutsche 15 gefördert. Im Eingabe-Modus ist der Stopper 17 geöffnet. Die Fördergut-Teile 6 sammeln sich vor einem Mitnehmer 27 des stillstehenden, also nicht umlaufenden ersten Speicher-Teils 20, d.h. im ersten Eingabe-Bereich A. Es werden so viele Fördergut-Teile 6 aufgestaut, bis der Taster 44 ein dauerhaftes Signal abgibt. Wenn dieses Signal eine vorgegebene Zeit ansteht, veranlaßt die Steuerung 45 durch Einschalten des Motors 30 einen Antrieb der Förder-Kette 25, so daß diese um eine vorgegebene Anzahl von Förder-Fächern 50 in Richtung zum ersten End-Bereich B hin bewegt wird. Die Zahl der Förder-Fächer 50, um die die Förder-Kette 25 in einem solchen Arbeitsschritt vorwärts bewegt wird, hängt davon ab, wie lang die Staustrecke 59 zwischen dem Taster 44 und dem ersten Mitnehmer 27 der stillstehenden Förder-Kette 25 ist. Wenn es sich um leichte, dünne Teile handelt, beispielsweise um Nachthemden, dann werden mehrere Fördergut-Teile 6 in einem Förder-Fach 50 untergebracht, während dann, wenn es sich bei einem Fördergut-Teil 6 um einen dicken Wintermantel handelt, möglicherweise nur in jedem zweiten Förder-Fach 50 ein Fördergut-Teil 6 untergebracht wird. Je nach Anfall von Fördergut-Teilen wird auf diese Weise der erste Teil-Speicher 20 gefüllt, bis er mit dicht auf dicht hängenden Fördergut-Teilen 6 belegt ist.

Da die durch die kurzen Stifte gebildeten ersten Signal-Geber 31 und der durch einen längeren Stift gebildete zweite Signal-Geber 32 ständig gezählt bzw. erfaßt werden, wird auf diesem Wege grundsätzlich auch erfaßt, in welchem Förder-Fach 50 sich welches identifizierte Fördergut-Teil 6 befindet.

Wenn der erste Teil-Speicher 20 vollständig mit Fördergut-Teilen 6 gefüllt ist und über den Eingabe-Förderer 1 weitere Fördergut-Teile 6 herangefördert werden, dann werden die am Ende der Transport-Schiene 22 im ersten End-Bereich B befindlichen Fördergut-Teile 6 auf die Zwischen-Rutsche 35 abgegeben. Die Fördergut-Teile 6 werden hierbei in der Vereinzelungs-Einrichtung 36 vereinzelt und von der zweiten Daten-Erfassungs-Station 37 erfaßt, die die Daten im zweiten Daten-Speicher 53 ablegt. Da weiterhin der Eingabe-Modus gilt, ist die Ausgabe-Weiche 38 auf internen Umlauf geschaltet, d.h. die über die Zwischen-Rutsche 35 zugeführten Fördergut-Teile 6 werden weiter in Speicher-Umlauf-Richtung 57, in Fig. 1 also im Uhrzeigersinn, auf die Weiterführ-Rutsche 39 gefördert. Von dort rutschen sie weiter in den zweiten Eingabe-Bereich D vor dem zweiten Teil-Speicher 42. Dort werden sie in gleicher Weise aufgenommen und von dem Taster 44' erfaßt, wobei auch eine Staustrecke 59' ausgebildet wird. Der Taster 44' arbeitet in der gleichen Weise wie der Taster 44, d.h. er veranlaßt den Antrieb der Förder-Kette 25' und das abschnittsweise Auffüllen des zweiten Teil-Speichers 42. Wenn beide Teil-Speicher 20, 42 dicht auf dicht gefüllt sind, dann wird durch Umschalten der Weiche 13 sichergestellt, daß keine weiteren Fördergut-Teile 6 vom Eingabe-Förderer 1 zugeführt werden. Die jeweilige Speicherkapazität beider Teil-Speicher 20, 42 ist jetzt erschöpft.

Wenn bestimmte Teile ausgegeben werden sollen, dann wird die Speicher-Einheit auf Ausgabe-Modus umgeschaltet. Hiermit wird der Stopper 17 geschlossen. Die auszugebenden Teile 6 werden über die Eingabe-Tastatur 47 eingegeben und im dritten Daten-Speicher 54 gespeichert. Aufgrund der geschilderten Erfassung jedes einzelnen Fördergut-Teiles 6 nacheinander und im Hinblick auf die Zählung der Förder-Fächer 50 beim ersten Teil-Speicher 20 und der Förder-Fächer 50 beim zweiten Teil-Speicher 42 weiß die Steuerung 45, wo sich ein bestimmtes Fördergut-Teil 6 in etwa befindet.

Befindet sich das zur Ausgabe ausgewählte Fördergut-Teil 6 auf dem ersten Teil-Speicher 20, so wird dieser im Schnellgang teilweise auf die Zwischen-Rutsche 35 entleert, wobei die Vereinzelungs-Einrichtung 36 geöffnet ist, so daß keine Vereinzelung stattfindet. Auch erfolgt keine Erfassung der einzelnen Fördergut-Teile 6 durch die zweite Daten-Erfassungs-Station 37. Die auf diese Weise durchgeförderten Fördergut-Teile 6 werden im Verzweigungs-Bereich C über die Ausgabe-Weiche 38 auf die Weiterführ-Rutsche 39 gefördert. Sie werden auf den zweiten Teil-Speicher 42 übergeben. Wenn dieser ebenfalls gefüllt war, dann wird dieser während der Teilentleerung des ersten Teil-Speichers 20 in gleicher Weise im Schnellgang angetrieben, so daß zumindest ein Teil der auf ihm befindlichen Fördergut-Teile 6 über die Rückführ-Rutsche 43 zum ersten Eingabe-Bereich A vor dem ersten Teil-Speicher 20 durchrutscht und auf diesen übergeben wird.

Wenn bei diesem Schnell-Durchfördern der Fördergut-Teile 6 das auszugebende Fördergut-Teil 6 in den ersten End-Bereich B gelangt, dann wird die Vereinzelungs-Einrichtung 36 in Betrieb gesetzt. Es erfolgt eine Vereinzelung der auf die Zwischen-Rutsche 35 abzugebenden Fördergut-Teile 6. Sie werden von der Daten-Erfassungs-Station 37 identifiziert. Wenn das auszugebende Teil 6 identifiziert ist, wird die Ausgabe-Weiche 38 umgeschaltet, so daß das auszugebende Fördergut-Teil 6 auf die Abführ-Rutsche 16 gelangt, und zwar bei geschlossenem Stopper 40 in die Ausgabe-Puffer-Zone 41. Dort werden die insgesamt auszugebenden Fördergut-Teile 6 gesammelt, bis eine aus mehreren Fördergut-Teilen 6 bestehende Fördergut-Einheit 58 zusammengestellt ist. Dann wird der Stopper 40 geöffnet und eine solche Einheit 58 wird auf den Ausgabe-Förderer 2 abgegeben. Während des Ausgabe-Modus erfolgt keine Eingabe von Teilen 6 in den Speicher 8, während sich neu einzugebende Fördergut-Teile 6 bereits in der Puffer-Zone 19, also vor dem geschlossenen Stopper 17, ansammeln können.

Wenn der erste Teil-Speicher 20 beim Umschalten auf den Ausgabe-Modus nicht vollständig gefüllt ist und/oder wenn der zweite Teil-Speicher 42 zu diesem Zeitpunkt nicht vollständig gefüllt ist, wenn also beim Durchfördern der Fördergut-Teile 6 auf dem ersten Teil-Speicher 20 die Fördergut-Teile 6 nicht vom zweiten Teil-Speicher 42 in einer solchen Weise durchgefördert werden müssen, daß der erste Teil-Speicher 20 bis zum ersten Eingabe-Bereich A gefüllt ist, dann kann nach Beendigung eines Ausgabe-Modus die Förder-Kette 25 des ersten Teil-Speichers 20 entgegen der Speicher-Umlauf-Richtung 57 angetrieben werden, bis auf dem ersten Teil-Speicher 20 vom ersten Eingabe-Bereich A an in Richtung 57 vollständig, d.h. dicht auf dicht, gefüllte Förder-Fächer 50 vorhanden sind und nicht gefüllte Fächer sich vor dem ersten End-Bereich B befinden.

Wenn - wie bereits angesprochen - ein Speicher 8 vollständig gefüllt ist, dann wird die Weiche 13 so umgeschaltet, daß weitere Fördergut-Teile 6 auf den nächsten Speicher 9 gefördert werden. Die Betriebsweise dort ist dann gleich der bisher geschilderten.

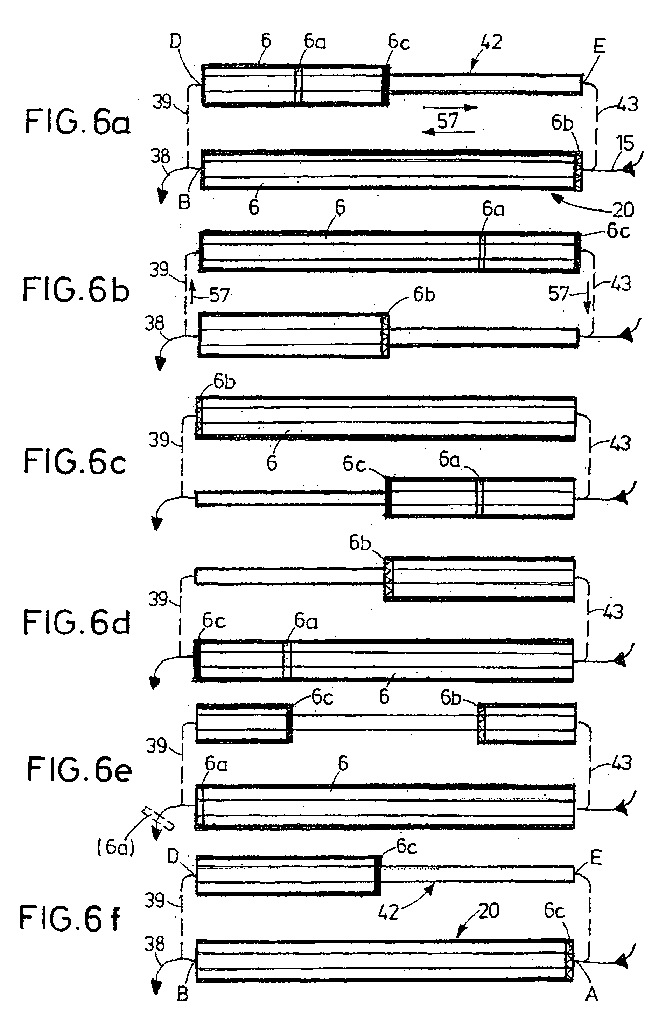

In Fig. 6a bis 6f ist dargestellt, wie ein zur Ausgabe ausgewähltes Fördergut-Teil 6a bis zur Ausgabe-Weiche 38 gefördert wird, das sich im - nicht vollständig gefüllten - zweiten Teil-Speicher 42 befindet. Beide Förder-Ketten 25, 25' werden hierbei mit gleicher Fördergeschwindigkeit in Speicher-Umlauf-Richtung 57 angetrieben. Das Fördergut-Teil 6a wandert hierbei in Richtung zum zweiten End-Bereich E, während vom ersten Teil-Speicher 20 Fördergut-Teile 6 über die Ausgabe- Weiche 38 in Richtung zum zweiten Teil-Speicher 42 durchgefördert werden. Wie der Zeichnung entnehmbar ist, wird hierbei das als letztes vor Beginn des Ausgabe-Modus im ersten Eingabe-Bereich A in den ersten Teil-Speicher 20 eingegebene Fördergut-Teil 6b, also das Fördergut-Teil 6b mit der kürzesten Verweilzeit im Speicher 8, in Richtung zum ersten End-Bereich B gefördert. Wenn das in Richtung 57 vorderste Fördergut-Teil 6c den zweiten End-Bereich E erreicht, wird es zum ersten Teil-Speicher 20 übergeben. Fig. 6c zeigt den Augenblick, wo sämtliche am Anfang des Ausgabe-Modus (Fig. 6a) im ersten Teil-Speicher 20 befindlichen Fördergut-Teile 6 sich auf dem zweiten Teil-Speicher 42 befinden. Es erfolgt weiterhin - wie von Anfang an - ein Antrieb beider Förder-Ketten 25, 25' mit gleicher Geschwindigkeit, so daß alle Fördergut-Teile 6, 6a, 6b, 6c ihre relative Lage zueinander und ihren relativen Abstand zueinander beibehalten. Das Fördergut-Teil 6b gelangt auf den zweiten Teil-Speicher 42, während das auszugebende Fördergut-Teil 6a bereits auf dem ersten Teil-Speicher 20 ist und in Richtung zum ersten End-Bereich B gefördert wird (siehe Fig. 6c und 6d).

Das gesamte Durchfördern der Fördergut-Teile 6, 6a, 6b, 6c verläuft weiter bis zu dem in Fig. 6e dargestellten Zustand, in dem sich das auszugebende Fördergut-Teil 6a im Bereich B befindet, wo es ausgegeben wird, was zusätzlich gestrichelt dargestellt ist. Anschließend werden die Fördergut-Teile 6, 6b und 6c weitergefördert, bis sich die Fördergut-Teile 6b und 6c wieder in ihrer Position wie in Fig. 6a befinden, wobei lediglich das auszugebende Fördergut-Teil 6a ausgegeben, also nicht mehr im Speicher 8 ist. Es erfolgt also maximal ein vollständiges Durchfördern aller Fördergut-Teile 6 in Speicher-Umlauf-Richtung 57. Die Lücke, die durch die Ausgabe des ausgewählten Fördergut-Teiles 6a entstanden ist, wird durch den beschriebenen Ablauf geschlossen und steht damit wieder als Speicherplatz zur Verfügung, und zwar unmittelbar neben dem Fördergut-Teil 6c.

Wenn sich - anders als beim zuvor beschriebenen Ausführungsbeispiel - das auszugebende Fördergut-Teil 6a in dem ersten Teil-Speicher 20 befindet, dann erfolgt ein Fördern der in diesem befindlichen Fördergut-Teile 6 in Speicher-Umlauf-Richtung 57. Hierbei werden alle nicht auszugebenden Fördergut-Teile 6, die vor dem auszugebenden Fördergut-Teil 6a in den ersten End-Bereich B gelangen, durch eine entsprechende Stellung der Ausgabe-Weiche 38 über die Weiterführ-Rutsche 39 dem zweiten Teil-Speicher 42 zugeführt. Sobald das auszugebende Fördergut-Teil 6a von der Daten-Erfassungs-Station 37 erfaßt wird, erfolgt eine Umstellung der Ausgabe-Weiche 38, so daß das auszugebende Fördergut-Teil 6a auch ausgegeben wird.

Für den Fall, daß zu diesem Zeitpunkt keine Fördergut-Teile 6 von dem zweiten Teil-Speicher 42 in den ersten Teil-Speicher 20 befördert worden sind, erfolgt ein Rück-Fördern der in dem ersten Teil-Speicher 20 verbliebenen Fördergut-Teile 6 in einer der Speicher-Umlauf-Richtung 57 entgegengesetzten Richtung, bis sich schließlich das Fördergut-Teil 6b mit der kürzesten Verweilzeit wieder unmittelbar benachbart als erstes zum ersten Eingabe-Bereich A befindet.

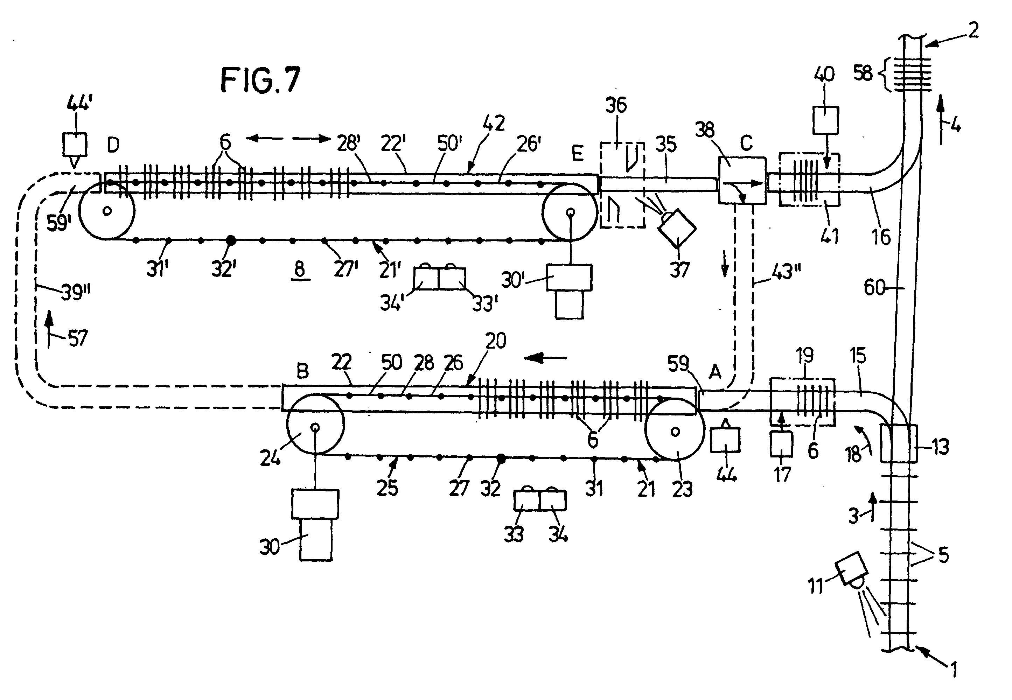

Das zweite Ausführungsbeispiel nach Fig. 7 unterscheidet sich von dem zuvor geschilderten ersten Ausführungsbeispiel nur geringfügig. Es werden daher dieselben Bezugsziffern verwendet. Insoweit wird auf die bisherige Beschreibung verwiesen.

Bei dem zweiten Ausführungsbeispiel führt die Weiterführ-Rutsche 39" direkt vom ersten End-Bereich B des ersten Teil-Speichers 20 zum zweiten Eingabe-Bereich D am zweiten Teil-Speicher 42. Die Zwischen-Rutsche 35, die Vereinzelungs-Einrichtung 36, das zweite Daten-Erfassungs-Gerät 37 und die Ausgabe-Weiche 38 schließen sich an den zweiten End-Bereich E des zweiten Teil-Speichers 42 an. Aus der Verzweigungs-Einheit C münden einerseits die zum ersten Eingabe-Bereich A führende Rückführ-Rutsche 43" und andererseits die in den Ausgabe-Förderer 2 führende Abführ-Rutsche 16 aus. Die Ausgabe von Fördergut-Teilen 6 erfolgt also aus dem zweiten Teil-Speicher 42.

Je nach dem Füllgrad der Teil-Speicher 20 und 42 können die über den Eingabe-Förderer 1 zugeführten Fördergut-Teile 6 durch eine entsprechende Stellung der Weiche 13 über einen Beypass 60 direkt zum Ausgabe-Förderer 2 weitergefördert und in einem nachgeordneten gleichartigen Speicher gelagert werden. Je nach gewünschtem Gesamt-SpeicherVolumen können mehrere derartige Speicher hintereinander angeordnet sein. Falls ein bereits aus einem vorhergehenden Speicher ausgelagertes Fördergut-Teil 6 über den Eingabe-Förderer 1 zugefördert wird, so wird dies über das Daten-Erfassungs-Gerät 11 erfasst, worüber dann die Weiche 13 auf den Beypass 60 geschaltet wird. Für alle weiteren nachgeordneten Speicher gilt dann das gleiche.

Der Arbeitsablauf ist wie folgt:

Zur Beschickung wird, wie beim ersten Ausführungsbeispiel, der erste Teil-Speicher 20 mit Fördergut-Teilen 6 gefüllt, bis er dicht auf dicht voll gepackt ist. Dann erfolgt über die Weiterführ-Rutsche 39" die Übergabe aller Fördergut-Teile 6 auf den zweiten Teil-Speicher 42, wobei die Steuerung der Motoren 30, 30' des ersten Teil-Speichers 20 bzw. des zweiten Teil-Speichers 42 über den Taster 44' derart erfolgt, dass der zweite Teil-Speicher 42 dicht auf dicht gepackt wird.

Zur Ausgabe von Fördergut-Teilen 6 wird der erste Teil-Speicher 20 mittels des Motors 30 angetrieben. Die Fördergut-Teile 6 gelangen hierdurch im ersten End-Bereich B auf die Weiterführ-Rutsche 39" bis vor den zweiten Eingabe-Bereich D. Über den Taster 44' wird ein Rückstau von Fördergut-Teilen 6 vor dem zweiten Eingabe-Bereich D erfasst. Wenn der Rückstau ein vorgegebenes Maß überschreitet, wird vom Taster 44' der Motor 30' eingeschaltet und damit der zweite Teil-Speicher 42 in Richtung 57 angetrieben. Der erste Teil-Speicher 20 wird so lange in Richtung 57 angetrieben, bis der zweite Teil-Speicher 42 gefüllt ist, also das am weitesten in Richtung 57 vorn liegende Fördergut-Teil 6 am zweiten End-Bereich E ankommt. Falls der erste Teil-Speicher 20 bereits vorher von Fördergut-Teilen 6 entleert ist, wird er zuvor angehalten. Falls das in Richtung 57 am weitesten vorn liegende Fördergut-Teil 6 am zweiten End-Bereich E ankommt, bevor der erste Teil-Speicher 20 entleert ist, wird der erste Teil-Speicher 20 entgegen der Richtung 57 so weit zurückgefahren, bis das auf ihm am weitesten zurückliegende Fördergut-Teil 6 am ersten Eingabe-Bereich A ankommt.

Zur eigentlichen Ausgabe der auszugebenden Fördergut-Teile 6 wird der zweite Teil-Speicher 42 über den Motor 30' angetrieben. Vom zweiten Daten-Erfassungs-Gerät 37 werden die Fördergut-Teile 6 erfasst. Die auszugebenden Fördergut-Teile 6 werden über die Ausgabe-Weiche 38 auf die Abführ-Rutsche 16 und von dort auf den Ausgabe-Förderer 2 ausgegeben. Die übrigen nicht auszugebenden Fördergut-Teile 6 werden über die Rückführ-Rutsche 43" in den ersten Eingabe-Bereich A gefördert. Die zurückgeführten Fördergut-Teile werden vor dem ersten Eingabe-Bereich A zwischengespeichert, bis der Taster 44 meldet, dass eine vorgegebene Rückstau-Strecke gefüllt ist. Dann wird über den Taster 44 der Anlauf des Motors 30 ausgelöst. Die vor dem ersten Eingabe-Bereich A befindlichen Fördergut-Teile werden dicht auf dicht auf den ersten Teil-Speicher 20 geladen.

Der geschilderte Ausgabe-Prozess wird so lange fortgesetzt, bis alle auszugebenden Fördergut-Teile 6 über den Ausgabe-Förderer 2 ausgegeben sind, oder bis der erste Teil-Speicher 20 durch das Rückführen nicht auszugebender Fördergut-Teile 6 vollständig gefüllt ist und das am weitesten in Richtung 57 auf dem ersten Teil-Speicher 20 befindliche Fördergut-Teil 6 am ersten End-Bereich B angekommen ist. Wenn dies der Fall ist, wird der zweite Teil-Speicher 42 entgegen der Richtung 57, also rückwärts, angetrieben, bis das am weitesten rückwärts befindliche Fördergut-Teil 6 am zweiten Eingabe-Bereich D ankommt. Dann erfolgt wiederum eine Übergabe von Fördergut-Teilen 6 in der geschilderten Weise vom ersten Teil-Speicher 20 auf den zweiten Teil-Speicher 42.

Wenn während der zuvor geschilderten Ausgabe von Fördergut-Teilen 6 eine vorgegebene Zahl von Fördergut-Teilen 6 an der Staustrecke 59 ansteht, dann werden über eine entsprechende Vorrang-Schaltung zuerst diese Fördergut-Teile 6 auf den ersten Teil-Speicher 20 aufgegeben.

## Patentansprüche

1. Verfahren zum Einlagern von Fördergut-Teilen (6) in einen Speicher (8, 9, 10) und zur Ausgabe von ausgewählten Fördergut-Teilen (6) mit folgenden Arbeitsschritten:
- In einem Eingabe-Modus werden in einer ersten Daten-Erfassungs-Station (11) Daten zur Identifikation aller in dem Speicher (8, 9, 10) zu lagernder Fördergut-Teile (6) in einem ersten Datenspeicher (52) einer Steuerung (45) gespeichert;
- die Fördergut-Teile (6) werden durch einen ersten Eingabe-Bereich (A) in einem ersten Teil-Speicher (20) gelagert, wobei die Fördergut-Teile (6) dicht auf dicht mit unmittelbar hintereinander befindlichen Fördergut-Teilen (6) in dem ersten Teil-Speicher (20) gelagert werden;
- die Fördergut-Teile (6) werden in Richtung (57) zu einer zweiten Daten-Erfassungs-Station (37) hin gefördert, wobei das Fördern fortschreitend in Abhängigkeit von nachfolgenden einzulagernden Fördergut-Teilen (6) erfolgt;
- die die Speicherkapazität des ersten Teil-Speichers (20) übersteigenden Fördergut-Teile (6) werden in einen zweiten Teil-Speicher (42) weiterbefördert, wobei die Fördergut-Teile (6) wiederum dicht auf dicht hintereinander in dem zweiten Teil-Speicher (42) eingelagert und fortschreitend in Abhängigkeit zugeführter Fördergut-Teile (6) in Richtung (57) zu dem ersten Eingabe-Bereich (A) hin befördert werden;
- an der zweiten Daten-Erfassungs-Station (37) werden die Identifikationen aller in den zweiten Teil-Speicher (42) zu befördernden Fördergut-Teile (6) erfaßt und in einem zweiten Daten-Speicher (53) gespeichert;
- in einem alternativ zu dem Eingabe-Modus über die Steuerung (45) aktivierbaren Ausgabe-Modus erfolgt eine Absperrung des Zuflusses weiterer in dem Speicher einzulagernder Fördergut-Teile (6);
- die Daten zur Identifikation von wenigstens einem aus dem ersten oder zweiten Teil-Speicher (20, 42) auszugebenden Fördergut-Teil (6) werden in einen dritten Daten-Speicher (54) der Steuerung (45) eingegeben;
- in der Steuerung (45) wird die Präsenz des mindestens einen auszugebenden Fördergut-Teils (6) in dem ersten oder zweiten Teil-Speicher (20, 42) ermittelt;
- die Steuerung (45) veranlaßt ein Fördern mindestens des das mindestens eine auszugebende Fördergut-Teil (6) beinhaltenden Teil-Speichers (20, 42);
- das mindestens eine auszugebende Fördergut-Teil (6) wird durch die zweite Daten-Erfassungs-Station (37) identifiziert;
- das mindestens eine auszugebende Fördergut-Teil (6) wird bei Übereinstimmung der von der zweiten Daten-Erfassungs-Station (37) erfaßten Identifikation mit der in dem dritten Daten-Speicher (54) gespeicherten Identifikation an einer Ausgabestelle ausgegeben;
- die Fördergut-Teile (6), deren von der zweiten Daten-Erfassungs-Station (37) erfaßten Identifikationen mit der mindestens einen in dem dritten Daten-Speicher (54) abgelegten Identifikation nicht übereinstimmen, werden in den zweiten Teil-Speicher (42) gefördert.

2. Verfahren nach Anspruch 1, **dadurch gekennzeichnet,**
**daß** nach Beendigung der Ausgabe des mindestens einen Fördergut-Teiles (6) die in dem Speicher (8) befindlichen Fördergut-Teile (6) derart gefördert werden, bis das Fördergut-Teil (6) mit der kürzesten Verweilzeit in dem Speicher (8) sich wieder unmittelbar benachbart als erstes im ersten Eingabe-Bereich (A) befindet.

3. Verfahren nach Anspruch 1, **dadurch gekennzeichnet,**
**dass** nach vollständiger Füllung des Speichers (8) mit Fördergut-Teilen (6) die Steuerung (45) die Einschaltung des Ausgabe-Modus und die Umleitung weiterer einzugebender Fördergut-Teile (6) an einen weiteren Speicher (9, 10) veranlasst.

4. Verfahren zum Einlagern von Fördergut-Teilen (6) in einen Speicher (8) und zur Ausgabe von ausgewählten Fördergut-Teilen (6) mit folgenden Arbeitsschritten:
- In einem Eingabe-Modus werden in einer ersten Daten-Erfassungs-Station (11) Daten zur Identifikation aller in dem Speicher (8) zu lagernder Fördergut-Teile (6) in einem ersten Datenspeicher (52) einer Steuerung (45) gespeichert;
- die Fördergut-Teile (6) werden durch einen ersten Eingabe-Bereich (A) in einem ersten Teil-Speicher (20) gelagert, wobei die Fördergut-Teile (6) dicht auf dicht mit unmittelbar hintereinander befindlichen Fördergut-Teilen (6) in dem ersten Teil-Speicher (20) gelagert werden;
- die Fördergut-Teile (6) werden in Richtung (57) zu einem ersten End-Bereich (B) hin gefördert, wobei das Fördern fortschreitend in Abhängigkeit von nachfolgenden einzulagernden Fördergut-Teilen (6) erfolgt;
- die Fördergut-Teile (6) werden in einen zweiten Teil-Speicher (42) weiterbefördert, wobei die Fördergut-Teile (6) wiederum dicht auf dicht hintereinander in dem zweiten Teil-Speicher (42) eingelagert und fortschreitend in Abhängigkeit zugeführter Fördergut-Teile (6) in Richtung (57) zu einem zweiten End-Bereich (E) hin befördert werden;
- in einem alternativ zu dem Eingabe-Modus über die Steuerung (45) aktivierbaren Ausgabe-Modus erfolgt eine Absperrung des Zuflusses weiterer in dem Speicher einzulagernder Fördergut-Teile (6);
- die Daten zur Identifikation von wenigstens einem aus dem ersten oder zweiten Teil-Speicher (20, 42) auszugebenden Fördergut-Teil (6) werden in einen dritten Daten-Speicher (54) der Steuerung (45) eingegeben;
- die Steuerung (45) veranlasst ein Fördern des zweiten Teil-Speichers (42) und ein Ausgeben von Fördergut-Teilen (6);
- an einer dem zweiten Teil-Speicher (42) nachgeordneten zweiten Daten-Erfassungs-Station (37) werden die Identifikationen aller aus dem zweiten Teil-Speicher (42) ausgegebenen Fördergut-Teile (6) erfasst und in einem zweiten Daten-Speicher (53) gespeichert;
- das mindestens eine auszugebende Fördergut-Teil (6) wird durch die zweite Daten-Erfassungs-Station (37) identifiziert;
- das mindestens eine auszugebende Fördergut-Teil (6) wird bei Übereinstimmung der von der zweiten Daten-Erfassungs-Station (37) erfassten Identifikation mit der in dem dritten Daten-Speicher (54) gespeicherten Identifikation an einer Ausgabestelle ausgegeben;
- die Fördergut-Teile (6), deren von der zweiten Daten-Erfassungs-Station (37) erfassten Identifikationen mit der mindestens einen in dem dritten Daten-Speicher (54) abgelegten Identifikation nicht übereinstimmen, werden in den ersten Teil-Speicher (42) gefördert.

## Claims

1. A method of storing conveyed articles (6) in a store (8, 9, 10) and of discharging selected conveyed articles (6), comprising the following steps:
- in an input mode, in a first data collection station (11), data for identifying all the conveyed articles (6) to be stored in the store (8, 9, 10) are recorded in a first data memory (52) of a control system (45);
- the conveyed articles (6) are stored via a first charging area (A) in a first sub-store (20), with the conveyed articles (6) being stored closely to directly successive conveyed articles (6) in the first sub-store (20);
- the conveyed articles (6) are conveyed in a direction (57) towards a second data collection station (37), conveyance taking place progressively in dependence on ensuing conveyed articles (6) to be stored;
- the conveyed articles (6) that exceed the storing capacity of the first sub-store (20) are passed on into a second sub-store (42), with the conveyed articles (6) again being stored one closely after the other in the second sub-store (42) and conveyed in the direction (57) towards the first charging area (A) progressively in dependence on supplied conveyed articles (6);
- at the second data collection station (37), the identifications of all the conveyed articles (6) which are to be supplied into the second sub-store (42) are detected and stored in a second data memory (53);
- in an output mode to be activated alternatively of the input mode by the control system (45), blocking takes place of the supply of further conveyed articles (6) to be stored in the store;
- the data for identification of at least one conveyed article (6) to be discharged from the first or second sub-store (20, 42) are fed into a third data memory (54) of the control system (45);
- the presence, in the first or second sub-store (20, 42), of the at least one conveyed article (6) to be discharged is determined in the control system (45);
- the control system (45) causes conveyance at least of the sub-store (20, 42) which contains the at least one conveyed article (6) to be discharged;
- the at least one conveyed article (6) to be discharged is identified by the second data collection station (37);
- the at least one conveyed article (6) to be discharged, upon agreement of the identification detected by the second data collection station (37) with the identification recorded in the third data memory (54), is discharged at a location of discharge;
- the conveyed articles (6), of which the identifications detected by the second data collection station (37) are not in agreement with the at least one identification recorded in the third data memory (54), are conveyed into the second sub-store (42).

2. A method according to claim 1, **characterized in that** after termination of the discharge of the at least one conveyed article (6), the conveyed articles (6) that are located in the store (8) are conveyed until the conveyed article (6) of shortest dwell time in the store (8) is again directly adjacent as the first one in the first charging area (A).

3. A method according to claim 1, **characterized in that** when the store (8) is completely filled with conveyed articles (6), the control system (45) causes switch-on of the output mode and deviation, to another store (9, 10) of further conveyed articles (6) to be charged.

4. A method of storing conveyed articles (6) in a store (8) and of discharging selected conveyed articles (6), comprising the following steps:
- in an input mode, in a first data collection station (11), data for identification of all the conveyed articles (6) to be stored in the store (8) are recorded in a first data memory (52) of a control system (45);
- the conveyed articles (6) are stored via a first charging area (A) in a first sub-store (20), with the conveyed articles (6) being stored in the first sub-store (20) closely to directly successive conveyed articles (6);
- the conveyed articles (6) are conveyed in the direction (57) towards a first end section (B), conveyance taking place progressively in dependence on ensuing conveyed articles (6) to be stored;
- the conveyed articles (6) are passed on into a second sub-store (42), with the conveyed articles (6) again being stored in close succession in the second sub-store (42) and conveyed in the direction (57) towards the second end section (E) progressively in dependence on conveyed articles (6) that are charged;
- in an output mode that can be activated via the control system (45) alternatively of the input mode, blocking takes place of the supply of further conveyed articles (6) to be stored in the store;
- the data for identification of at least one conveyed article (6) to be discharged from the first or second sub-store (20, 42) are fed into a third data memory (54) of the control system (45);
- the control system (45) causes conveyance of the second sub-store (42) and discharge of conveyed articles (6);
- at a second data collection station (37) downstream of the second sub-store (42), the identifications of all the conveyed articles (6) discharged from the second sub-store (42) are detected and recorded in a second data memory (53);
- the at least one conveyed article (6) to be discharged is identified by the second data collection station (37);
- the at least one conveyed article (6) to be discharged, upon agreement of the identification detected by the second data collection station (37) with the identification recorded in the third data memory (54), is discharged at a location of discharge;
- the conveyed articles (6), of which the identifications detected by the second data collection station (37) are not in agreement with the at least one identification recorded in the third data memory (54), are conveyed into the first sub-store (42).

## Revendications

1. Procédé destiné au stockage d'articles transportés (6) dans un stock (8, 9, 10), et au déstockage d'articles transportés (6) sélectionnés, comportant les phases de travail suivantes :
- dans un mode d'entrée, des données d'identification de tous les articles transportés (6) à stocker dans le stock (8, 9, 10) sont saisies dans un premier poste de saisie de données (11), et mémorisées dans une première mémoire de données (52) d'une commande (45) ;
- les articles transportés (6) sont stockés par l'intermédiaire d'une première zone d'entrée (A) dans un premier stock partiel (20), les articles transportés (6) étant stockés dans le premier stock partiel (20) avec des articles transportés (6) situés étroitement les uns derrière les autres ;
- les articles transportés (6) sont transportés dans le sens (57) vers un deuxième poste de saisie de données (37), le transport étant effectué progressivement en fonction d'articles transportés (6) suivants à stocker ;
- les articles transportés (6) dépassant la capacité de stockage du premier stock partiel (20) sont transportés dans un deuxième stock partiel (42), les articles transportés (6) étant à nouveau stockés étroitement les uns derrière les autres dans le deuxième stock partiel (42), et étant transportés progressivement en fonction d'articles transportés (6) amenés dans le sens (57) vers la première zone d'entrée (A) ;
- sur le deuxième poste de saisie de données (37), les identifications de tous les articles transportés (6) à transporter dans le deuxième stock partiel (42) sont saisies et mémorisées dans une deuxième mémoire de données (53) ;
- dans un mode de sortie pouvant être activé par l'intermédiaire de la commande (45) en alternative au mode d'entrée, l'amenée d'autres articles transportés (6) à stocker dans le stock est stoppée ;
- les données d'identification d'au moins un article transporté (6) à déstocker du premier ou du deuxième stock partiel (20, 42) sont mémorisées dans une troisième mémoire de données (54) de la commande (45) ;
- la présence de l'au moins un article transporté (6) à déstocker dans le premier ou le deuxième stock partiel (20, 42) est déterminée dans la commande (45) ;
- la commande (45) déclenche un déplacement, au moins du stock partiel (20, 42) contenant l'au moins un article transporté (6) à déstocker ;
- l'au moins un article transporté (6) à déstocker est identifié par le deuxième poste de saisie de données (37) ;
- en cas de concordance de l'identification saisie par le deuxième poste de saisie de données (37) avec l'identification mémorisée dans la troisième mémoire de données (54), l'au moins un article transporté (6) à déstocker est délivré au niveau d'un emplacement de déstockage ;
- les articles transportés (6), dont les identifications saisies par le deuxième poste de saisie de données (37) ne correspondent pas à l'au moins une identification mémorisée dans la troisième mémoire de données (54), sont transportés dans le deuxième stock partiel (42).

2. Procédé selon la revendication 1, **caractérisé en ce que**, après la fin du déstockage de l'au moins un article transporté (6), les articles transportés (6) se trouvant dans le stock (8) sont transportés de telle sorte que l'article transporté (6) ayant séjourné le moins longtemps dans le stock (8) se trouve à nouveau au voisinage immédiat de la première zone d'entrée (A) en tant que premier article.

3. Procédé selon la revendication 1, **caractérisé en ce que**, après le remplissage complet du stock (8) avec des articles transportés (6), la commande (45) déclenche le mode de sortie et la déviation d'autres articles transportés (6) à entrer vers un autre stock (9, 10).

4. Procédé destiné au stockage d'articles transportés (6) dans un stock (8), et au déstockage d'articles transportés (6) sélectionnés, comportant les phases de travail suivantes :
- dans un mode d'entrée, des données d'identification de tous les articles transportés (6) à stocker dans le stock (8) sont saisies dans un premier poste de saisie de données (11), et mémorisées dans une première mémoire de données (52) d'une commande (45) ;
- les articles transportés (6) sont stockés par l'intermédiaire d'une première zone d'entrée (A) dans un premier stock partiel (20), les articles transportés (6) étant stockés dans le premier stock partiel (20) avec des articles transportés (6) situés étroitement les uns derrière les autres ;
- les articles transportés (6) sont transportés dans le sens (57) vers une première zone d'extrémité (B), le transport étant effectué progressivement en fonction d'articles transportés (6) suivants à stocker ;
- les articles transportés (6) sont transportés dans un deuxième stock partiel (42), les articles transportés (6) étant à nouveau stockés étroitement les uns derrière les autres dans le deuxième stock partiel (42), et étant transportés progressivement en fonction d'articles transportés (6) amenés dans le sens (57) vers une deuxième zone d'extrémité (E) ;
- dans un mode de sortie pouvant être activé par l'intermédiaire de la commande (45) en alternative au mode d'entrée, l'amenée d'autres articles transportés (6) à stocker dans le stock est stoppée ;
- les données d'identification d'au moins un article transporté (6) à déstocker du premier ou du deuxième stock partiel (20, 42) sont mémorisées dans une troisième mémoire de données (54) de la commande (45) ;
- la commande (45) déclenche un déplacement du deuxième stock partiel (42), et un déstockage d'articles transportés (6) ;
- les identifications de tous les articles transportés (6) déstockés du deuxième stock partiel (42) sont saisies sur un deuxième poste de saisie de données (37) disposé en aval du deuxième stock partiel (42), et mémorisées dans une deuxième mémoire de données (53) ;
- l'au moins un article transporté (6) à déstocker est identifié par le deuxième poste de saisie de données (37) ;
- en cas de concordance de l'identification saisie par le deuxième poste de saisie de données (37) avec l'identification mémorisée dans la troisième mémoire de données (54), l'au moins un article transporté (6) à déstocker est délivré au niveau d'un emplacement de déstockage ;
- les articles transportés (6), dont les identifications saisies par le deuxième poste de saisie de données (37) ne correspondent pas à l'au moins une identification mémorisée dans la troisième mémoire de données (54), sont transportés dans le premier stock partiel (42).
